# EUROPEAN PATENT APPLICATION

(11) **EP 4 360 795 A1**
(43) Date of publication of application: **01.05.2024**
(21) Application number: 22425052.2
(22) Date of filing: 31.10.2022
(51) Int. Cl.: B23K 11/11, B23K 11/24, B23K 11/25, G06F 13/00

(54) **WELDING CELL, USE THEREOF AND WELDING METHOD PERFORMED THEREBY**

(71) Applicant: Diakont S.r.l., 50025 Montespertoli (FI) (IT)
(72) Inventor: Fedosovskiy, Mikhail, 197720 Saint Petersburg (RU); Uvarov, Mikhail, 194352 Saint Petersburg (RU)
(74) Representative: Emmi, Mario

(57) **Abstract**

The invention relates to a welding cell for a resistance spot welding, use of the welding cell for a resistance spot welding and a welding method performed by the welding cell. The welding cell comprises means (104) for implementing the resistance spot welding technology, data collecting means (101), means (102) for improving efficiency of data collecting and processing and monitoring and control means (103). The welding cell comprises a data transmission priority manager (126) configured to adjust a digit capacity, a transmission rate and a transmission frequency of the digitized signal, separately, for signals of each sensor, and a digital twin controller (131), which, based on said digitized signal, provides a control signal to the control unit to control the electromechanical actuators for moving the electrodes of the welding cell. The welding cell allows performing the resistance spot welding with predictable and controllable quality, increased performance and reduced requirements to the computing unit performance of the welding cell and reduced costs for equipping the welding cell.

## Description

### FIELD OF THE INVENTION

The present invention relates to a welding cell for a resistance spot welding, use of the welding cell for a resistance spot welding and a welding method performed by the welding cell.

### BACKGROUND OF THE INVENTION

Resistance spot welding became commonly used in the automotive industry. For example, spot welding is used for connecting vehicle metal body parts. A welding gun for spot welding generally has two electrodes with at least one movable electrode driven by a linear electromechanical actuator (hereinafter, EMA). The welding gun is located on an arm of an industrial manipulator (hereinafter, a robot), which is controlled by the controller of the robot. During configuration, a spatial coordinate of the end of the electrode of the welding gun is determined, for example, by bringing the electrode to the calibration plate without a gap between them and recording the current coordinate. Before welding, the robot is trained - with a control unit an operator brings the welding gun to the weld spot such that the second electrode touches one of the workpieces. During welding, the robot moves the welding gun to two or more workpieces fixed in the equipment such that the one of welding gun electrodes touches one of the workpieces at a right angle to the surface of the part to be welded. Then, in response to a command from a weld timer to the robot controller in accordance with a welding program stored in the weld timer internal memory, the EMA brings the movable electrode to the workpieces. After the movable electrode contacts one of the workpieces, the welding gun clamps the workpieces between the electrodes with a prescribed force. This force is maintained by limitation of EMA motor current consumption at a certain level corresponding to said force. Further, the force which the workpiece is clamped with is referred to as an electrode clamping force. Then by a command from the weld timer in accordance with the stored welding program, the prescribed electric current is passed to a transformer located on the welding gun. The transformer amplifies the current to thousands of amperes and passes the current through the electrodes, in particular, through caps on the ends thereof that contact the workpieces, and through the workpieces, which causes local heating, melts the metal in the clamped area and forms a weld nugget. After the welding current is no longer supplied (electric current application is predefined in the welding program as well), the metal cools and hardens, and the parts become joined at the weld nugget - a weld spot is created. Then the weld timer sends command to the robot to open the welding gun and release welded parts. The robot then moves the welding gun electrode away from the completed weld spot and to a next weld place on the same parts.

Caps on the ends of the electrodes are subject to wear during welding from cycle to cycle. The wear results in a change in the size of the contact area, which affects contact resistance, temperature in the welding zone and, correspondingly, the welding quality. To recover the shape of the caps, a cap dressing machine or a cap grinding machine or any other similar cap shape recovering machine is utilized. The shape of the caps is being recovered while there are no workpieces in the welding cell. The cap shape recovering machine is being invoked for example by the robot when the welding gun is brought thereto. Once the cap is critically worn so its shape cannot be further recovered it is replaced with a new one. To decrease the cap replacement time, a cap replacing machine is introduced into the welding cell.

The current passing through the electrode caps and the transformer causes them to heat up. To provide cooling a water supply device is used, which pumps a cold water through tubes on the welding gun connected to the electrodes and transformer.

Several robots with the welding guns and the weld timers supplemented by the cap dressing machine and the cap replacing machine are joined into a welding cell for welding vehicle body parts. Several welding cells form a vehicle body production line. A higher level production equipment controls the welding cell equipment in a certain way which is discussed in details further.

The welding cell performance is measured in welded workpieces that are evaluated as complying with quality requirements per working shift. The number of good weld spots per shift will be considered as welding cell performance. Not only the robot movement speed, welding gun electrode speed and other dynamic parameters of welding cell mechanisms affect the welding cell performance. The poor quality weld spots are to be reworked which consumes additional time. Thus, the number of poor quality weld spots decreases the welding cell performance.

To improve the quality of the weld spot it is necessary to provide the repeatability of welding modes during operation. During operation, environmental conditions, cooling water temperature, thickness and surface texture of the caps of the welding electrodes change. Deviations in the geometry of the workpieces and gradual wear of the articulated joints of the robot manipulator and electromechanical actuator (EMA) mechanism of the movable electrode are also possible. Further, one of the negative factors is the deviation of the clamping force for pressing the electrode to the workpieces, which causes metal splashing, incomplete penetration and burns of the workpieces. An insufficient, low clamping force will lead to the fact that the molten metal from the center of the weld spot can splash out between the sheets to be welded and from under the electrodes, and therefore the weld spot will have lower strength. On the other side, when too high clamping force is applied, the contact area of the metal sheets increases, and the resistance in the welding spot decreases, which results in a decrease in the heating of metal in the weld spot, and decrease in the weld nugget of the weld spot. Moreover, the welding quality decreases with inequality of clamping forces on electrodes.

Considering that the welding is performed with predefined parameters, such as clamping force value, welding current value and duration of the welding current application, ensuring the required welding quality becomes labor intensive, since predefined parameters may not be suitable for changing welding conditions. Labor-intensity is defined by introducing an additional destructive testing of the welding so as to check the welding strength, in order to conclude that the welding of the workpieces is performed with high quality. Additionally, the quality of the workpiece outer surface after welding can be evaluated: the presence of surface splashes, the depth of the dent from the electrode, changes in geometry of the workpiece due to welding or the clamping force of the electrodes, etc.

According to the results of testing and, if necessary, the additional evaluation of the workpiece outer surface quality after welding, the welding programs in the weld timer are corrected.

To prevent said deviations, it is necessary to monitor/test the technological parameters and welding modes and introduce corrective actions in the welding cycle operations. To compensate for the above negative factors the introduction of various sensors and systems for monitoring, processing, analyzing data from these sensors and making decisions based on the analysis results of these data in the welding gun control systems is known.

EP 1508396 B1 discloses a method of EMA control providing electrode force control. According to the disclosed method, the position of the welding gun electrode is adjusted in order to maintain a target force at the electrode. A force feedback is provided by a force sensor placed on the welding gun. Such electrode force control method utilizes direct force measurement instead of EMA motor current adjustment, which advantageously increases accuracy, repeatability and welding gun electrode force adjustment speed. However, it should be taken into account that such method implementation requires a high performance processor, additional high bandwidth data transmission channels to be introduced into the welding cell in order to provide a fast and timely data transmission from force and position sensors to the processor for an adjustment calculation of the required electrode position.

Thus, a new equipment - clamping force sensors to measure the clamping force on electrodes, force sensors signals transducers and force sensors data processing units - is introduced into the welding cell in order to provide welding gun movable electrode control based on direct force measurement. It is important that during metal melting process a resistance between workpieces changes. The electrode force not only can be maintained at a predetermined level but can be adjusted to keep the resistance in a prescribed tolerance range. To acquire data about the resistance a voltage sensor is introduced into the welding gun so as to measure the voltage on electrode. Knowing the voltage and the current passing through workpieces, the resistance can be calculated with a predefined frequency during welding process. Thus, an additional set of cables are to be placed between the welding gun and the controller where the data processing takes place.

One of the negative factors leading to poor-quality welding, is a nonideal right angle between electrodes and workpieces, which can cause metal splashing or burns of the workpieces when welding current is supplied to the workpieces, and decrease in strength of the obtained weld spot. In CN 110587096 B additional sensors can be applied to provide the right angle between welding gun electrodes and workpieces, configured to collect data, based on which a processor performs evaluation of work angle of the electrode relative to the workpieces. For example, several sensors can be located on one of the welding gun electrodes, configured to determine the distance from the sensor to the workpiece. Based on the data on distance between each of the sensors and workpieces, the processor calculates the work angle of the electrode relative to the workpieces and instructs the robot to correct a position of the welding gun if the angle is out of the tolerance range. Based on this evaluation, the position of the welding gun relative to the workpieces is corrected. Obviously, these sensors also require additional cable lines to be laid, additional placement of analog-to-digital signal converters of such sensors for further processing by a processor, an increase in the bandwidth of the communication lines of these analog-to-digital converters with the processor, and an increase in processor performance to process simultaneously the data from these sensors, an electrode position sensor, a clamping force sensors, which determine the clamping force of the workpieces, and other sensors. It is to be noted that the transmission of data from the sensors to the processor, which is located, for example, in a robot controller, is carried out via cables that are laid from the welding gun through robot arms to the robot controller. Therefore, the more sensors are located in the welding cell, the more cables and connections are required to be placed on the robot. Accordingly, the load on the robot increases, and the weight of the welding gun that the robot can move decreases. However, placing the unit with processor on the welding gun reduces the cell performance, or increases power consumption thereof due to increase in the welding gun weight. Regardless of the location of the unit with processor (computing unit), the communication lines between analog-to-digital signal converters of the sensors and processor shall have sufficient bandwidth.

The performance of the welding cell is also directly affected by the duration and frequency of maintenance of the mechanisms, such as the EMA moving the welding gun movable electrode, as well as the duration of unplanned downtime in the event of the EMA or welding gun failure. To evaluate the state of the EMA and calculate (predict) the maintenance interval or its replacement in the EMA, the control system receives and processes data from the temperature sensor of the electric motor that drives the welding gun electrode, from the sensors of the current consumed by the electric motor, the generated electrode clamping force. When the welding gun operates with seating cones for the caps on electrodes with high wear, the cap can fly away from the mounting seat. To prevent damage to workpieces from impacts of an electrode without a cap, a flow sensor is installed at the electrode cooling circuit, the data from which are transmitted to the processor. Each additional sensor in the welding cell increases the load on the processor, increases the delay in data processing, requires an increase in the power of the processor or processors, as well as an increase in the number of processing cores.

The conventional welding cell concept implies that several units (the weld timer, the robot) exchange big data amount in-between. In combination with plurality of sensors for acquiring data about EMA condition, weld spot condition, different auxiliary equipment condition such as water supply device and cap shape recovering machine and the other, it requires every unit to be complex - to store programs for welding in weld time, to store programs for moving EMA in the robot, cap shape recovering program and the other. The more functions each unit has the more complex it becomes. Furthermore, the complexity of overall system increases and the problem of data processing performance arises - the more data is acquired the more cable lines and intermediate processing units are required; the more data is being processed and the more judgements are being made the more powerful processors are required.

The welding cell disclosed in CN 101201339 B comprises a Data Transmission Control Unit which unifies (standardize) a data acquired from different sensors which can be advantageously used to decrease processing performance requirements for a data processor (Data Processing Center according to the patent document). However, the proposed Data Transmission Control Unit feeds all data continuously to the data processor disregarding the current welding cell operation stage: the welding gun movement between weld spots, closing or opening the welding gun, applying force and current to the workpiece, etc. Furthermore all data is unified by the Data Transmission Control Unit in the identical way disregarding the current welding cell operation stage (listed previously). Thus, the processing unit acquires the whole data continuously which requires high processing performance of the data processor. It is important that for the weld spot quality improvement the data must be collected and processed with a maximum resolution in time. This additionally increases the processing performance requirement and leads to delay in data processing and overall welding cell performance decreasing.

Therefore, there is a need to develop a welding cell for resistance spot welding with a predictable and controllable quality, increased performance and reduced requirements to the computing unit performance of such welding cell and reduced costs for equipping such welding cell.

### SUMMARY OF THE INVENTION

To solve the indicated problems, in accordance with one aspect, a welding cell for a resistance spot welding comprises: at least one welding gun for a resistance spot welding, each welding gun comprising two movable electrodes and electromechanical actuators to move said two movable electrodes, a control unit to control said electromechanical actuators, at least one robot for mutual positioning of the welding gun and workpieces to be welded; data collecting means comprising clamping force sensors for measuring the clamping force on electrodes; and means for improving efficiency of data collecting and processing, the means comprising: an amplifier to amplify a signal of the clamping force sensors, an analog-to-digital converter to convert the amplified signal of the clamping force sensors into a digitized signal; wherein the welding cell comprises monitoring and control means comprising a digital twin controller configured to provide, based on said digitized signal, a control signal to the control unit to control the electromechanical actuators for moving electrodes; furthermore, the said means for improving efficiency of data collecting and processing further comprise a data transmission priority manager configured to adjust a digit capacity, a transmission rate and a transmission frequency of the digitized signal transmitted to the digital twin controller, separately, for signals of each sensor.

By using a welding gun comprising two movable electrodes equipped with EMA means controlled by a separate EMA control unit, it is possible to accelerate the welding cycle, since the EMA means move the electrodes much faster than if this were done only by the robot with a large inertia, said inertia preventing from developing a high conveying speed and quickly stopping the electrode when it touches the workpieces to be welded.

Due to presence of the data transmission priority manager in the welding cell, which, based on the current operating modes of the welding cell, regulates the data update rate for each data transmission channel, the data converted by analog-to-digital converters, a time resolution required at the moment is provided, and the total load on the data transmission channels is reduced during system operation. Therefore, the main problem of such devices is solved - excessive requirements for the overall performance of computing assemblies for processing a wide variety of signals at the required response time of the device around 1 ms. An increase in system performance is achieved by reducing data processing delays, since the amount of data for simultaneous processing is significantly reduced. At each time for processing, only those data that are necessary at the current step of technological process are received by the processor of the monitoring and control device. The presence of the data transmission priority manager allows to provide calculation of the welding parameters and evaluation of welding quality based on the actual data on welding, predict the equipment state, generate control signals (actions) using monitoring and control means located in the welding cell without transmitting a large amount of various data to a remote data processing center for subsequent analysis and judgment of welding quality, which requires laying of high-speed communication lines between welding cells and production line control systems.

In one of the embodiments of the present invention, the monitoring and control means further comprise a monitoring and control device comprising a transceiver to receive said digital signal, and a processor, and wherein the data transmission priority manager is a signal switcher configured as of a software module executable by the processor of the monitoring and control device.

This feature allows to adjust the data transmission parameters at the input to the welding cell devices, reducing the load on them and reducing the requirements for the bandwidth of communication channels between welding cell devices and monitoring and control device. In another embodiment, the signal switcher is configured as a software module, which is located in the device, in which the receiving and/or transmitting device corresponding to this signal is located. Due to this, it is possible to reduce the load on the processor of this device by allocating a separate software module for adjusting data transmission parameters, which has a positive effect on improving the performance of this device, or reduces the performance requirements of the processor of this device.

In one of the embodiments of the present invention, the data collecting means further include a work angle sensor for determining a work angle of the welding gun relative to a surface of the workpieces, and the digital twin controller is configured to provide an adjustment of the work angle of the welding gun relative to the workpieces by means of the robot.

In one of the embodiments of the present invention, caps are provided on the ends of the electrodes, and the welding cell further comprises a cap recovering or replacing device.

In one of the embodiments of the present invention, the welding cell further comprises a cooling circuit for the electrodes and a water supply device to supply water into said cooling circuit.

In one of the embodiments of the present invention, the digital twin controller is configured to evaluate a state of the welding cell equipment and a state of welding operations using at least one of the methods: comparison with reference values, comparison with calculation results using a mathematical model, comparison with a digital twin of the welding cell equipment and the welding operations, evaluation and classification using a neural network.

Moreover, advantageously, the said digital twin controller can be further configured to predict the state of the welding cell equipment and the welding operation parameters based on the behavior of the digital twin, and to provide a control signal to the control unit to control the electromechanical actuators for moving the electrodes based on said evaluation and said prediction of the state of the welding cell equipment and the welding operation parameters.

This improves the welding quality under conditions of changing welding parameters, and further increases the welding cell performance by increasing the number of suitable weld spots.

In one of the embodiments of the present invention, the means for improving efficiency of data collecting and processing further comprise a data compressor configured to combine digitized signals from several sensors.

By non-separate transmitting the digitized signals of welding cell sensors, but combined into data packets, it is possible to reduce the number of cable lines between the components of the welding cell, and reduce the number of cable lines that are located on the robot, thereby reducing a load thereon and an energy consumption thereof. Reducing the number of cable lines allows reducing the cost of equipping the welding cell, also increasing its reliability due to a smaller number of cable line connections, reducing energy consumption and increasing the performance of welding cell by reducing the load on the robot.

In accordance with another aspect, use of the above disclosed welding cell for performing a resistance spot welding is disclosed.

In accordance with another aspect, a welding method performed by the above disclosed welding cell is disclosed, the method comprising the following steps: providing the above disclosed welding cell and advancing the welding gun so that to move the electrodes for touching workpieces to be welded; performing clamping force accumulation and stabilization; performing determination of welding parameters; welding with simultaneous evaluation of welding parameters and predicting further welding spot quality, and then changing of welding parameters based on the prediction and; moving apart of the electrodes and moving to the next spot.

### BRIEF DESCRIPTION OF THE DRAWINGS

Fig. 1 schematically shows the welding gun.
Fig. 2 schematically shows a robotized welding cell with an industrial manipulator and the welding gun attached thereto.
Fig. 3 shows a structure of the welding cell.
Fig. 4 shows welding cycle steps and the position of electrodes relative to the workpieces to be welded.
Fig. 5 shows welding cycle steps and data used at each step.
Fig. 6 shows welding cell operation steps and diagnostic data transmitted during these steps.

### DETAILED DESCRIPTION OF EMBODIMENTS

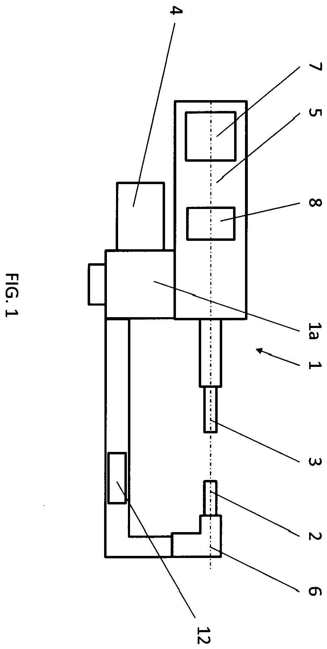

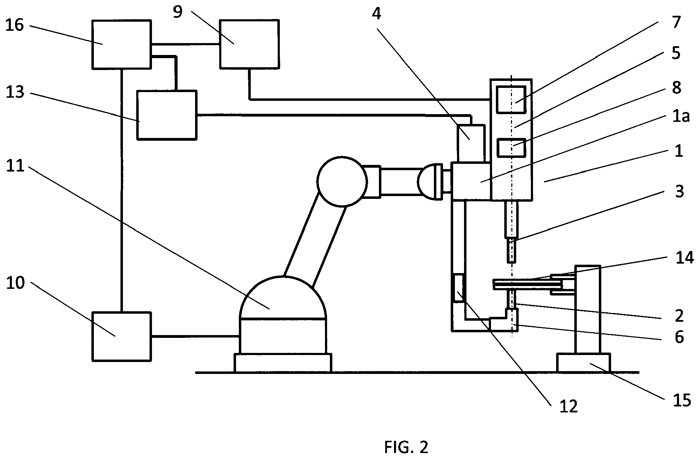

A structure of the welding cell shown in Fig. 1 incorporates a welding gun 1 comprising a C-shaped base 1a and workpiece clamping means configured in the form of two electrodes 2 and 3 and used during resistance spot welding. It is to note that a C-type welding gun is one of the options, and the welding cell can comprise an X-type gun, a Pinch-type gun, or any other mechanism known for performing a contact resistance welding using one or two electrodes. A transformer 4 is arranged on the base 1a of the welding gun 1 to supply a welding current to the electrodes 2 and 3. A temperature sensor is arranged in the transformer 4 (not shown). A movable electrode linear actuator, such as a linear electromechanical actuator (EMA) 5, is fixedly locked on the base 1a to move the electrode 3. The electrode 3 is fixed on an EMA rod (not shown) of the EMA 5. The EMA 5 comprises an electric motor (not shown) with a rotor and a stator (not shown), a position sensor 7, which can be an encoder or a resolver attached to the EMA 5 rotor. The EMA 5 further comprises a clamping force sensor 8, an electric motor stator temperature sensor (not shown) and a mechanism for converting rotational motion of the rotor into translational motion of the EMA rod of the EMA 5, for example, a roller-screw gear. It is to note that in another embodiment the EMA 5 can be used also with a ball screw gear or any other mechanism known for converting rotational motion of the rotor into translational motion of the rod. The clamping force sensor 8 can be a strain gage sensor or a piezosensor. The position of the clamping force sensor 8 inside the EMA 5 is preferable to reduce the length of the EMA 5 and reduce the weight of the welding gun 1. In other embodiments, the clamping force sensor 8 can be fixed, for example, between the EMA rod of the EMA 5 and the electrode 3. A counter-rotation assembly is incorporated in the EMA 5 to prevent rotation of the EMA rod of the EMA 5 and the electrode 3 during operation of the roller-screw gear together with the EMA rod of the EMA 5. Such arrangement of the counter-rotation assembly is preferable to reduce the weight and size of the welding gun. Instead of incorporated counter-rotation assembly, the welding gun can be provided with a counter-rotation assembly in the form of, for example, a guide (not shown). It is to note that along with the example presented, the EMA 5 can be presented as a linear electric motor that does not require a mechanism for converting rotational motion into translational motion of its rod, or in the form of any other known EMA design for the EMA 5. An EMA 6 is placed on the welding gun to move the electrode 2. The EMA 6 comprises an electric motor (not shown), a rod (not shown), a roller-screw gear (not shown) for converting rotational motion of the rotor in said electric motor into translational motion of said rod and a position sensor (not shown). The electrode 2 is attached to the EMA rod of the EMA 6. The position sensor in the EMA 6 is configured such that a position of the electrode 2 can be determined based on its signal, and can be a resolver or encoder attached to the rotor of the EMA electric motor of the EMA 6. A gearbox (not shown) is placed in the EMA 6, which increases the clamping force on the electrode 2 without increasing the electric motor size (not shown). However, the EMA 6 can have any other design suitable for moving the electrode 2. The welding cell comprises EMA control means of the EMA 5 and the EMA 6, which are presented by a control unit 9 shown in Fig. 2. The EMA control unit 9 provides control signals for the EMA 5 and the EMA 6 to move the electrodes 2 and 3 and monitors the position of the electrodes 2 and 3 using a signal of the position sensor 7 in the EMA 5 and a signal of the position sensor in the EMA 6. Current sensors (not shown) are arranged in the control unit 9 to measure a current consumed by the EMA electric motors of the EMA 5 and the EMA 6. The control unit 9 monitors the behavior of the EMA electric motors of the EMA 5 and the EMA 6 and corrects the control signals also according to the measured currents consumed by these electric motors. A clamping force sensor 12 is arranged on the welding gun to measure the clamping force on electrode 2, which can be represented, for example, by a resistance strain gage or a piezosensor, attached in the deformation area of the welding gun 1. When clamping the welding gun 1, all components thereof, through which the clamping force on electrodes is transmitted, are deformed, which results in changing the position of the electrodes 2 and 3 approximately by an amount of the total deformation of the welding gun 1. The amount of deformation depends on the clamping force on the electrodes 2 and 3. The position of the electrodes 2 and 3 is monitored by the EMA position sensors 7 of the EMA 5 and the EMA 6, due to which a relationship between the position of the electrodes 2 and 3 and the clamping force on these electrodes can be determined. In turn, by controlling the movement of the electrodes 2 and 3 using the EMA control unit 9, the clamping force on these electrodes can be adjusted. This is one of the methods to control the clamping force developed by the electrodes 2 and 3 by using the EMA 5 and the EMA 6 position circuit. In case the X type welding gun is utilized, such type of welding gun incorporates two electrodes 2 and 3, movable by two EMA 5, that may be connected to said EMAs by the rotatable joint and thus form a leverage between EMAs and said electrodes.

Fig. 2 schematically shows an equipment for performing the main technological operations of the welding cell, the equipment comprising a robot 11 representing an industrial manipulator consisting of movable arms and having six degrees of freedom, and the welding gun 1 fixed on the last movable arm of the robot, comprising a base 1a and the electrodes 2 and 3. The welding cell further comprises a weld timer 13 to supply current to the transformer 4, which converts this current into a welding current supplied to the electrodes 2 and 3, and a robot controller 10 to control the robot 11. The control unit 9 to control the EMA 5 and the EMA 6, the robot controller 10 and the weld timer 13 are connected by communication lines to a monitoring and control device 16 arranged to monitor and control the welding cell and configured, for example, as an electronic computer with a processor, for exchanging signals of readiness for performing operations, commands for starting operations and completing operations. In different embodiments, the EMA control unit 9 can be arranged as a stand-alone unit, the EMA control unit 9 can be combined with the robot controller 10, or the EMA control unit 9 can be arranged in the monitoring and control device 16. The equipment further comprises a mounting arrangement 15 for fixing workpieces 14 therein, which can be represented by at least two metal parts of the product, for example, vehicle body parts. There may be two or more workpieces 14, depending on the product design. It is to note that in order to exclude metal splashes during welding, the electrodes 3 and 2 are to be advanced to the workpieces 14 at a right angle. If the electrodes 2 and 3 are tilted relative to the workpieces 14, the contact area of these electrodes with the workpieces 14 will decrease, the resistance as a result will increase, and when the welding current is applied to the electrodes 2 and 3 and the workpieces 14, the metal of the workpieces 14 will be overheated therebetween. In this case uneven clamping of the electrodes 2 and 3 to the workpieces 14 also contributes to metal splashing- due to their work angle, areas with low clamping force are formed in the clamping area, from where the metal splashes from the weld spot. Since the workpieces 14 are mounted in the mounting arrangement 15 with some tolerance, a situation is possible when the electrodes 2 and 3 are not directed to the surface of the workpieces 14 at the right angle. To automatically change the orientation of the welding gun 1 in space such as to provide the right angle between electrodes 2 and 3 and workpieces 14, one or more sensors (not shown) are mounted on the welding gun 1, thus allowing to determine the work angle of the at least one electrode 2 or 3 relative to the workpieces 14. For example, sensors can measure a distance to the workpieces 14 in a noncontacting, for example, optical manner. The difference between an actual work angle of the electrode 2 and/or 3 relative to the workpieces 14 and the right angle is determined by the difference between the distances of several sensors. The robot 11 rotates the welding gun 1 so that the indicated difference is within the tolerance range preset in the program of the monitoring and control device 16.

Several robots 11 with the welding gun 1 mounted thereon can be placed in the welding cell. The number of control units 9 and weld timers 13 corresponds to the number of robots 11. Robot controllers 10 of the robots 11 can be less if several of them are combined into one device. Several robots 11 in one welding cell are required to provide high performance of the welding cell when welding large body parts with a plurality of weld spots. In this case, each robot 11 with the welding gun 1 performs welding of a certain group of weld spots simultaneously with other robots.

It is important to note that the welding gun 1 can be fixedly arranged, if, for example, only one welding gun 1 is sufficient to weld parts. In this case, a flange (not shown) is formed on the base 1a of the welding gun 1, through which the welding gun 1 is attached to the base (not shown), fixed on the floor of the production hall. The workpieces 14 to be welded are fed thereto using the robot 11 having a mounting arrangement on a movable axis (not shown) for gripping these workpieces. The robot 11 moves the workpieces 14 to be welded so as the welding point/spot is between the electrodes 2 and 3 of the welding gun 1. Therefore, the robot 11 moves the workpieces 14 to be welded relative to the welding gun 1 until all weld spots will be finished.

Workpieces 14 can have different thickness, material, surface shape deviation, coating thickness and coating type, and the like. At the same time, from welding to welding, change of the environmental conditions occurs, for example, temperature or cooling water flow in the cooling circuit of the electrodes 2 and 3, the transformer 4 and other components that require heat transmission during operation. Also, due to a constant heating during welding and compression during clamping the caps (not shown) provided at the ends of electrodes 2 and 3 wear out, while the length, shape and surface texture of the caps change. When welding aluminum, a film appears on the surface of the caps, which affects the resistance between the cap and the workpieces 14. Usually, the parameters of the welding cycle, such as force, amplitude and waveform of the welding current in time, are set manually by an operator in the weld timer 13. Considering that on the workpieces 14 there can be several groups of weld spots with different numbers of metal sheets, and the same welding cell can weld the workpieces 14 having different thicknesses, setting up the welding cell can take a significant amount of time. Furthermore, it is to note that in order to avoid a decrease in the welding quality due to the incompatibility of the preset parameters for a specific weld spot with changing conditions, the monitoring and control device 16 receives, analyzes and generates a control signal for the equipment for performing the main technological operations of the welding cell. In order to calculate the welding parameters (force, input power, etc.) it is required to obtain data on the resistance value between the workpieces 14 and the electrodes 2 and 3 and between the workpieces 14 (hereinafter a contact of the electrodes 2 and 3 with the workpieces 14 is understood as a contact of caps on these electrodes with the workpieces 14). For this purpose, in addition to clamping force sensors 8 and 12, a voltage sensor (not shown) can be arranged on the welding gun, two probes of which are conductors having, for example, O-shaped tips at the ends, connected to the electrodes 2 and 3 using, for example, fastening screws passed through said tip and screwed into the corresponding threaded holes (not shown) on the electrodes 2 and 3. A welding current sensor (not shown) is arranged in the weld timer 13, which measures the welding current passed through the electrodes 2 and 3 by the transformer 4. Further, according to the data received from the voltage sensor and the welding current sensor, the resistance between the workpieces 14 and the electrodes 2 and 3 and between the workpieces 14 is calculated. The amplitude and waveform of the welding current are adjusted by the current resistance value, due to which the energy supplied to the weld spot is controlled and adjusted.

Channels are arranged in caps to cool the caps on the electrodes 2 and 3 (not shown). These channels are part of the cooling circuit through which water circulates. The cooling circuit also contains channels in the transformer 4 for cooling thereof, channels in the EMA 5 and the EMA 6 to cool their electric motors. The channels are interconnected by pipes (not shown). A water supply device is arranged in the welding cell, for example, a pumping station (not shown), which pumps water through the pipes laid through the robot to the above mentioned components. The welding cell also contains a cap shape recovering devise (not shown), for example, a cap sharpening machine (not shown), which removes some material from the caps and reshapes the surface to original form, by which they come in contact with the workpieces 14. A cap replacing device is arranged in the welding cell (not shown), by which caps that no longer have enough material to remove, i.e. completely worn caps, are removed and replaced with new ones. The water supply device, the cap shape recovering device and the cap replacing device relate to an auxiliary equipment of the welding cell. In other embodiments, the list of auxiliary equipment 144 can be extended by automated means for fixing the workpieces 14 (not shown), personnel security means, for example, welding cell perimeter violation sensors (not shown), automatic door locks in welding cell (not shown) and the others.

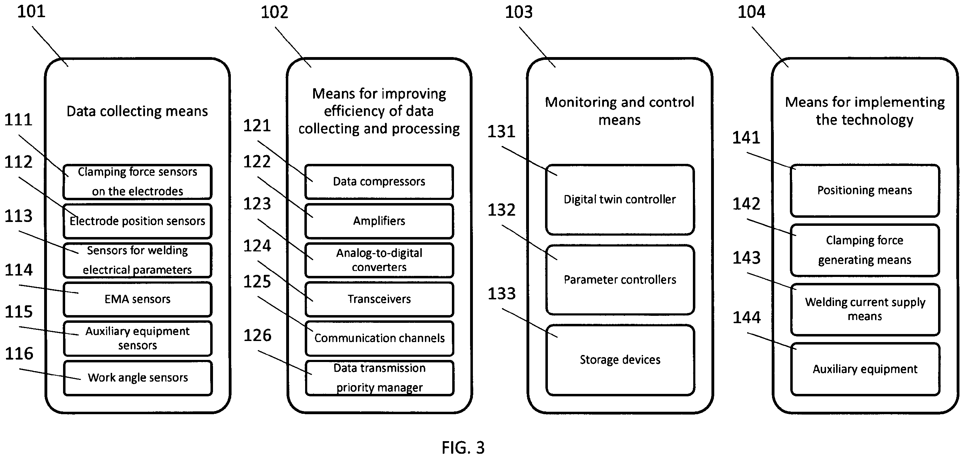

The components of the welding cell are divided into several groups as, shown in Fig. 3.

A group of data collecting means 101 includes:
- Clamping force sensors 111, which in one embodiment include a clamping force sensor 8 and a clamping force sensor 12 for measuring the clamping force on electrodes 2 and 3;
- Position sensors 112, which include: position sensors in the EMA 5 and the EMA 6 for determining the position of electrodes 2 and 3, position sensors of the robot moving arms of the robot 11, for example, position sensors of the electric motor rotors, which drive movable arms of the robot 11 (not shown), to determine the position of the welding gun 1 relative to the workpieces 14;
- Sensors 113 for welding electrical parameters, which include a welding current sensor and a voltage sensor between the electrodes 2 and 3 on the welding gun 1;
- EMA sensors 114, which include current sensors in the EMA control unit 9 to determine the current consumed by EMA electric motors of the EMA 5 and the EMA 6, stator temperature sensors of the EMA electric motors of the EMA 5 and the EMA 6;
- Auxiliary equipment sensors 115, which include cooling water flow sensors (not shown) in the cooling circuit of the electrodes 2 and 3, cooling water temperature sensors (not shown) in the cooling circuit of the electrodes 2 and 3;
- Work angle sensors 116 of the electrodes 2 and 3 of the welding gun 1 relative to the workpieces 14.

A group of means 102 for improving efficiency of data collecting and processing includes secondary transducers for normalizing and converting sensor signals of the welding cell into a form suitable for processing by the actuator control units of the welding cell. The secondary transducers include, for example, amplifiers 122. For example, an output signal of the clamping force sensors 8 and 12 is amplified by amplifiers 122. Amplification of the signal is necessary to improve the noise immunity of the signal and the signal-to-noise ratio. An analog-to-digital converter (hereinafter referred to as ADC) 123 converts the amplified signal of the clamping force sensor 8 or 12 into a digital signal transmitted via RS-485 interface. The ADC 123 for signals of the clamping force sensors 8 or 12, configured in the form of an integrated circuit or a microcircuit (not shown), can be arranged directly on the clamping force sensor 8 or 12 or, for example, inside the EMA 5 in a closed volume. Other ADCs 123 can be arranged near the sensor, for example, near a welding current sensor or a voltage sensor between electrodes 2 and 3. All or part of the ADC 123 may be arranged in devices that combine the digitized signals of several sensors, or in the monitoring and control device 16. For example, a data compressor 121 is arranged on the welding gun 1 or in the EMA 5, which is an example of a device that combines the digitized signals of several sensors. The compressor 121 is presented in the form of a printed circuit board with a set of integrated circuits (IC) that perform the functions of an ADC converting signals of the clamping force sensors 8 and 12, of the voltage sensor and of the welding current sensor on electrodes 2 and 3 into digitized signals. On the same printed circuit board there is an integrated circuit for combining and transmitting the digitized signals of the indicated sensors into the monitoring and control device 16 or the EMA control unit 9. The combined digitized signals are transmitted in packets (packages) of data to the monitoring and control device 16 or to the EMA control unit 9. By combining the digitized signals, it is possible to reduce the number of cables between the welding gun 1 and the EMA control unit 9. Communication channels 125 for transmitting signals from sensors to actuator control units, for example, the robot controller 10 and the EMA control unit 9, also relate to means 102. Communication channels 125 are cable lines or individual conductors, as well as tracks on printed circuit boards that connect the functional elements of the welding cell. The group 102 of the welding cell includes data transmission priority manager 126 (hereinafter referred to as the priority manager), which, based on the current operating modes of the welding cell and the step of the welding cycle, adjusts the data update rate for each communication channel 125, providing the currently required resolution over time and reducing the overall load on the communication channels 125 during welding cell operation. In a preferred embodiment, the priority manager 126 is a software module that is executed by the processor (not shown) in the monitoring and control device 16. The welding cycle that is performed in the welding cell, is divided into welding cycle steps, for each step the following is determined: data that critically affects the result, data that affects the result, and data that does not affect the result. For each data, the discretization in time that is necessary to achieve a qualitative result is determined. The transition conditions from one elementary operation to another and settings of the priority manager 126 for optimal loading of the communication channels 125 and the processor loading of the monitoring and control device 16 are also determined. Using these settings, the priority manager 126 regulates the use of the communication channels 125 between devices of the welding cell, as well as the use of the processing power of the processor and the use of memory of the monitoring and control device 16 and other control devices of the welding cell, for example, the EMA control unit 9. The priority manager 126 in one of the embodiments is the main software module - the priority manager 126 itself, and auxiliary software modules - signal switchers (not shown). The signal switchers are executed by the processor of the monitoring and control device 16, adjusting a transmission rate, transmission frequency and a digit capacity of the digitized signal, which is received through the transceivers 124 in the monitoring and control device 16, controlled by said signal switcher. In the embodiment, wherein a data compressor 121 is provided, combining the digitized signals from several sensors into data messages, the priority manager 126 skips or does not skip certain parts of messages (data bits) received by the monitoring and control device 16 from the data compressor 121. Therefore, the priority manager 126 adjusts the data transmission rate (the amount of data per unit of time), digit capacity (the length of the message characterizing a value of the transmitted parameter, for example, the clamping force) and the data transmission frequency, reducing the load on the processor of the monitoring and control device 16, allowing to reduce the requirements for the processing power of this processor, reduce the delay before evaluating the received data by reducing the amount of this data, and therefore the delay before the formation of control actions.

A group of monitoring and control means 103 includes a digital twin controller 131 (hereinafter referred to as DTC 131), parameter controllers 132 and storage devices 133 provided in the monitoring and control device 16. The DTC 131 in one of the embodiments is configured as a software module executable by the processor of the monitoring and control device 16. Storage devices 133 are configured in the form of, for example, EEPROM microcircuits or flash memory in the monitoring and control device 16. Storage devices 133 are designed, among other things, to store welding cycle programs, auxiliary equipment call programs, primary welding parameters, such as welding current values and clamping forces of the electrodes 2 and 3, statistical data such as sets of actual welding current values, resistance between workpieces 14 and electrodes 2 and 3 and between workpieces 14, clamping forces on the electrodes 2 and 3 for performed welds, parameters of the priority manager 126. The EMA parameter controllers 132 comprise, for example, controllers of the electric motor current, electric motor speed, electric motor position of the EMA 5 and the EMA 6. The settings of the parameter controllers 132 determine the response time of the system to which they relate (the EMA control unit 9, the weld timer 13, the robot controller 10 of the robot 11), to the control action and the magnitude of the error of the controlled parameter. For example, the electric motor current controller determines how sharply the electric motor current will change, when it differs from the set current and how large the error of the actual current relative to the set current can be, and the electric motor speed controller determines how quickly the speed change will occur, how much the actual speed can differ from the set speed.

A group of means 104 for implementing the resistance spot welding technology of the welding cell in one of the embodiments includes: positioning means 141 representing a robot 11, for mutual positioning of the welding gun 1 and the workpieces 14; clamping force generating means 142, which are presented by the welding gun 1 having the movable electrodes 2 and 3; welding current supply means 143, which include a transformer 4 and a weld timer 13; an auxiliary equipment 144, which includes a cap shape recovering device (not shown), a cap replacing device (not shown), a device for supplying water to the cooling circuit of the components of the welding gun 1, such as the electrodes 2 and 3, the transformer 4, the EMA 5 and the EMA 6 (not shown).

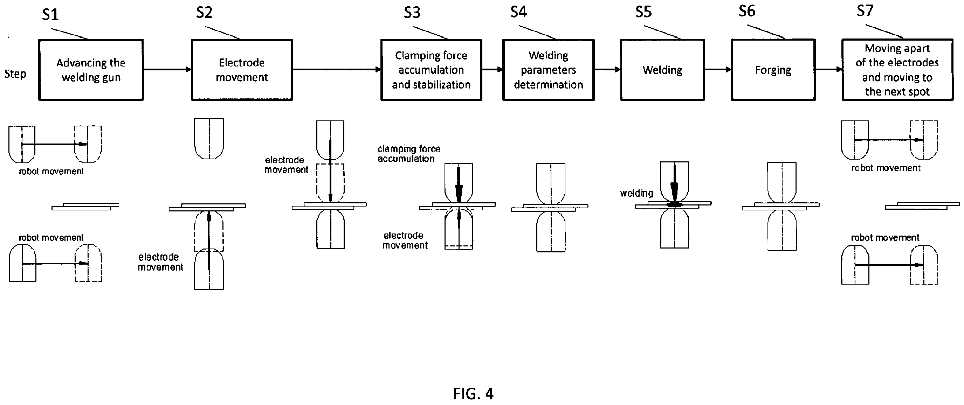

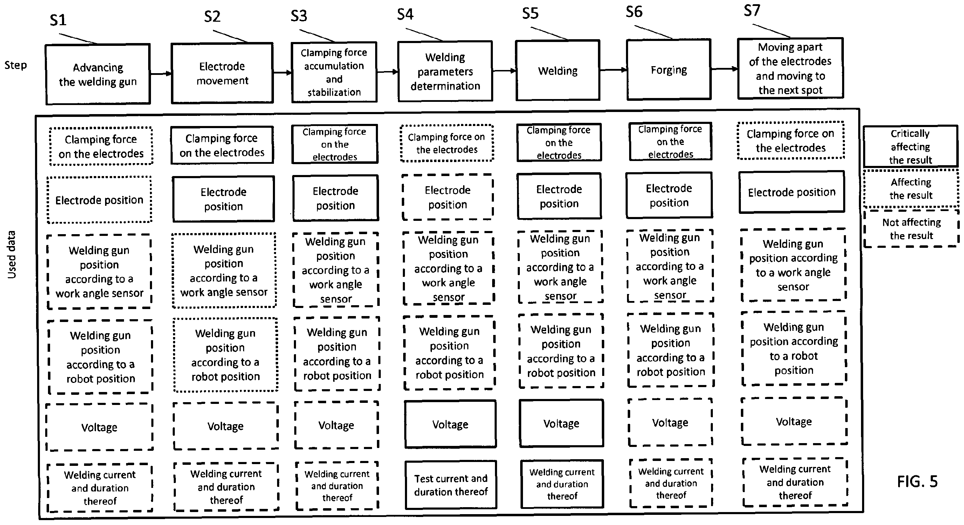

Welding of the workpieces 14 is the main technological operation performed by the welding cell. Welding cycle steps (welding of the workpieces 14) and corresponding movements of the electrodes 2 and 3 are shown in Fig.4. Fig. 5 shows the data that critically affect the result of the cycle performance, affect the result and do not affect the result, at each step of the welding cycle. The priority manager 126 transmits data to the DTC 131 depending on the degree of their influence on the result at each step of the welding cycle. Hereinafter, the operation of the welding cell at each step is described, and it is described how the priority manager 126 in a preferred embodiment of the welding cell performs data transmission to the DTC 131. The implementation algorithm of the priority manager 126 includes the functions of adjusting the data update rate on each communication channel 125 or by groups of communication channels 125, combined by hardware or functional features, the function of setting and adjusting the parameters of these control functions depending on the elementary operation performed at the current moment of the welding cycle, the function of saving these parameters to a memory device and/or an external memory device connected directly or remotely via a computer network, the functions of downloading these parameters for further use and/or correction. In the embodiment of the welding cell with a data compressor 121 the priority manager 126 performs: adjustment of the digit capacity of the data transmitted to the DTC 131 by removing bits in the message depending on the required digit capacity, adjustment of the data transmission rate by removing part of the data message, and adjustment of the data transmission frequency by removing data message.

The priority manager 126 sets the data transmission parameters depending on the modes that are set by the DTC 131 depending on the current step of the welding cycle, including the operation of the auxiliary equipment144. The monitoring and control device 16 gives the command to start the welding cycle step, the DTC 131 receives the data about sending the command, determines from the actual parameters collected by the data collecting means 101 that the welding cycle step has actually begun, and sets the priority manager 126 to the operation mode. Moreover, the priority manager 126 can have one operating mode defined as the idle operating mode, in which only the data necessary for the DTC 131 to judge the start of the welding cycle are retransmitted.

Further, the welding cycle performed by the welding cell is described with reference to Fig. 4, wherein the control of the clamping force of the electrodes 2 and 3 is implemented through the EMA position circuit of the EMA 5 and the EMA 6. In this case, in order to quickly change the clamping force, clamping force and electrode position data shall be transmitted to the DTC 131. However, it is possible to implement the welding cell, wherein the control of the clamping force of the electrodes 2 and 3 is implemented by changing the limit of the current consumed by the EMA electric motors of the EMA 5 and the EMA 6, and in such case, the position data of the electrodes 2 and 3 according to EMA sensor data of the EMA 5 and the EMA 6 shall not be transmitted. Instead of the position data of electrodes 2 and 3, in this embodiment, data on the current consumed by the EMA electric motors of the EMA 5 and the EMA 6 will be transmitted. It should be noted that the data transmission parameters are described hereinafter, that are transmitted specifically to the DTC 131 and which are necessary to carry out the adaptation of the parameters of the actuators, such as the EMA 5 and the EMA 6 of the welding gun 1, the transformer 4, the robot 11, to predict and ensure the quality of the weld spot and predict the state of the equipment of the welding cell. All data, including diagnostic data, that are necessary for operation of these actuators, are transmitted to the control units of these actuators, such as the EMA control unit 9, the weld timer 13, the robot controller 10 of the robot 11, with rate, frequency and digit capacity depending on the required performance and processing speed of these actuators.

At step S1 of advancing the welding gun, the robot 11 according to a robot control program of the robot 11 pre-programmed by the operator using the control panel (not shown) performs the movement of the welding gun such that the electrodes 2 or 3 are located in the area of the first weld spot perpendicular to the surface of the workpieces 14.

Data transmission parameters at step S1 of advancing the welding gun (as shown in Fig. 5):
- The position data of the welding gun, obtained from the position data of the arms of the robot 11, are rarely transmitted to the DTC 131, with low digit capacity and low rate, since at step S1 there is no adaptive adjustment of the position parameters of the welding gun in space. The movement of the welding gun 1 in space, determined by the position of the welding gun 1 at each moment of time, between spots specified for welding, does not affect the result of the execution of the welding cycle.
- The position data of the welding gun from the work angle sensor are rarely transmitted to the DTC 131, with low digit capacity and low rate, since at the time of moving the welding gun 1 between spots specified for welding, ensuring that the electrodes 2 or 3 of the welding gun 1 are perpendicular to the workpiece 14, is not required. Therefore, these data do not affect the result of the step.
- The position data of the electrodes 2 and 3 are transmitted to the DTC 131 at medium frequency, medium digit capacity and medium rate. The transmission of the position data of the electrodes is required in order for the DTC 131 to verify that the electrodes 2 and 3 are in the correct position to avoid collision of the electrodes 2 or 3 with the workpieces 14. Therefore, these data affect the result of the step.
- Clamping force data on the electrodes 2 and 3 are transmitted to the DTC 131 at medium frequency, medium digit capacity and medium rate. By changing the clamping force, the DTC 131 detects the collision of the electrodes 2 and 3 with the workpieces 14, which is an emergency at this step. Therefore, these data affect the result.

At step S2 of moving the electrodes at the command of the monitoring and control device 16 of the welding cell, the EMA control unit 9 connects the electrodes 2 and 3 so that they touch the workpieces 14. The movement of the electrodes 2 and 3 during the free running before contact with the workpieces 14 preferably occurs at a maximum rate determined by the characteristics of the EMA 5 and the EMA 6. The movement speed of the electrodes 2 and 3 at the time of contact with the workpieces 14 or beforehand is reduced to avoid collision of the electrodes with the workpieces at a speed, which will damage the workpieces.

Data transmission parameters at step S2 of moving the electrodes:
- The position data of the welding gun as obtained from the position data of the arms of the robot 11 are transmitted to the DTC 131 at medium frequency, medium digit capacity and medium rate, since at step S2 a verification of the work angle of the electrodes 2 and 3 relative to the workpieces 14 and correction of the work angle of the welding gun 1 relative to the workpieces 14 are performed, if the specified angle is outside the predefined allowable angles stored in the monitoring and control device 16. Therefore, these data influence the result of the execution of the welding cycle.
- The position data of the welding gun 1 from the work angle sensor are transmitted to the DTC 131 at medium frequency, maximum digit capacity and medium rate, since before connecting the electrodes 2 and 3 a verification of the work angle between spots specified for welding is performed, and change in work angle of the electrodes 2 or 3 of the welding gun 1 relative to the workpieces 14 is required. Therefore, these data affect the result.
- Force data on electrodes 2 and 3 are transmitted to the DTC 131 with maximum parameters. The DTC 131 detects the time of contact of the electrodes 2 and 3 with the workpieces 14 by increasing the clamping force, and remembers the position of the electrodes 2 and 3, corresponding to the time of start of increasing the clamping force. Due to the tolerance for the mounting of workpieces 14, the tolerance of the shape of the workpieces 14, the tolerance of the thickness of the workpieces 14, the wear of the caps of the electrodes 2 and 3 the place of contact of the electrodes 2 and 3 with the workpieces 14 changes between weld spots. Accordingly, a high rate and frequency of the clamping force data transmission are needed for the DTC 131 to calculate the position of the electrodes 2 and 3, corresponding to the contact position with minimum delay after the actual contact of the electrodes 2 and 3 with the workpieces 14. Furthermore, transmission of clamping force with maximum parameters allows to stop the electrode 2 or 3, if workpieces 14 are touched earlier than predicted by the DTC 131 in case, for example, when instead of two workpieces 14, three workpieces 14 were mounted in the mounting arrangement 15. Therefore, these data critically affect the result of the welding cycle.
- The position data of the electrodes 2 and 3 are transmitted to the DTC 131 with maximum parameters, since the DTC 131 determines the position of the electrodes 2 and 3, corresponding to a place of their contact with the workpieces 14. The maximum transmition frequency and the digit capacity are required to obtain the position data as close as possible to the actual position, at which the electrodes 2 and 3 contacted the workpieces 14, and to reduce the movement speed of the electrodes 2 and 3 as close as possible to the time of contact or at the time of contact with the workpieces 14 in order to maximize the time of movement at maximum speed and reduce the time of the welding cycle. These data are also required to monitor the wear of the caps on electrodes 2 and 3 between welding cycles. The time of the welding cycle affects the performance of the welding cell and production line, accordingly, the position data of the electrodes 2 and 3 at step S2 critically affect the result.

At step S3 of clamping force accumulation and stabilization accumulation and stabilization of clamping force of the workpieces 14 occurs. The EMA position sensors of the EMA 5 and the EMA 6 determine the thickness of the workpieces 14 by calculating, based on a certain contact position of the electrodes 2 and 3 with each other at step of setting the welding gun 1 or at the next procedure for recovering the cap shape or replacement thereof and the position of the electrodes 2 and 3, corresponding to the target force or the force at which the electrodes 2 and 3 contacted the workpieces 14. The DTC 131 transmits the wear measure of the caps to the storage device 133. At step S3 an equalization is also performed to compensate for the deflection of the arm of the electrode 2 when the compression force is accumulated on one side, to ensure that the clamping force is equal on both sides of the workpieces 14. This is performed by adjusting the position of one or both of the electrodes of the welding gun using the EMA 5 or the EMA 6 according to the signal of the clamping force sensors 8 or 12.

Data transmission parameters at step S3 of accumulation and stabilization of the clamping force:
- Force data on electrodes 2 and 3 and position data of the electrodes 2 and 3 are transmitted to the DTC 131 with maximum frequency, maximum digit capacity and maximum rate in order to provide fast accumulation of the clamping force to a target, while monitoring the actual clamping force on electrodes and adjusting the position if the clamping force differs from the target. Therefore, a quick accumulation and stabilization of the clamping force is ensured. The time of the welding cycle affects the performance of the welding cell and the production line. Accordingly, the position data of the electrodes 2 and 3 at step S3 critically affect the result.
- The position data of the welding gun 1 in relation to the position data of the arms of the robot 11 are transmitted to the DTC 131 with minimum frequency, rate and digit capacity or are not transmitted. These data do not affect the result, since position adjustment of the welding gun 1 is not performed at this step.
- The position data of the welding gun 1 from the work angle sensor are not transmitted to the DTC 131, since the position of the welding gun in space is no longer adjusted at this step. These data do not affect the result of the welding cycle.

Due to that the DTC 131 receives only limited data that critically affect the result, it is ensured that the target clamping force is reached and stabilized, the delay between receiving a signal from the data compressor 121 regarding clamping force from the clamping force sensors 8 and 12 on electrodes 2 and 3 and output a control action by the digital twin controller 131 to the EMA control unit 9 is reduced. Therefore, a reduced accumulation and stabilization time of the clamping force is provided. At the same time, it is possible to reduce the power requirements of the processor executing a program of the DTC 131.

At step S4 the weld timer 13 supplies a test current (a current of small magnitude compared to the current at which welding is performed) through the transformer 4, which increases the current (amperage) to thousands or tens of thousands of amperes, to electrodes 2 and 3. Based on the actually measured value of the current passed through the workpieces 14 according to the current sensor and the actual voltage value according to the voltage sensor on electrodes 2 and 3, the DTC 131 calculates the resistance between workpieces 14 and electrodes 2 and 3 and between workpieces 14. Based on the resistance and thickness of the workpieces 14, as well as the preset material of the workpieces 14, the type and thickness of coating of the workpieces 14, the DTC 131 calculates and sets the primary welding parameters - a force, an amplitude and a waveform of the welding current. Although step S4 is separated as a separate step for convenience, it can be performed at the end of step S3. If the current force differs from that calculated based on the controlled parameters of the workpieces 14, the clamping force is corrected with equalization by the movement of the electrodes 2 and 3 according to the signal of the clamping force sensors 8 and 12. At step S4 an evaluation of necessity of cap replacement on electrodes 2 or 3 is also performed.

Data transmission parameters at step S4 of determining of welding parameters:
- Voltage and test current data are transmitted to the DTC 131 with maximum data transmission parameters in order to quickly calculate the resistance between electrodes 2 and 3 and workpieces 14 and between workpieces 14 and, based on the resistance, to calculate the initial welding parameters of workpieces 14 - welding current and the duration of its application (welding current waveform) and double check that the current force is suitable for welding. These data critically affect the result of the step.
- Force data on electrodes 2 and 3 are transmitted to the DTC 131 at medium frequency in order to monitor its change when the test current is applied. Since at this step all parameters are predetermined, the pulse duration or the test current may be too large and lead to a large heating of the metal and a change in the clamping force. Transmitting force data to the DTC 131 at this step allows reducing a delay before starting to weld workpieces 14 at step S5. These data affect the result of the step.
- The position data of the electrodes 2 and 3 are not transmitted to the DTC 131, since at this step adjustment of their position is not required. These data do not affect the result.
- The position data of the welding gun in relation to the robot position and from the work angle sensor are not transmitted to the DTC 131, since the clamping force of the electrodes is already achieved, and the position of the welding gun is not allowed to change in order to avoid damage to the workpieces 14. These data do not affect the result.

At step S5 of welding the weld timer 13 supplies the initially calculated welding current through the transformer 4 in one or more pulses while holding of the clamping force of the electrodes 2 and 3, wherein this force can be constant or change during the welding process. For example, the clamping force is maintained at a constant level by adjusting the position of one or both of the electrodes 2, 3 of the welding gun 1 using the EMA 5 or the EMA 6 according to the signal of the clamping force sensors 8 and 12 at metal heating and expansion step of the workpieces 14 in the area of formation of the weld spot core, so that the clamping force is not too high, which will lead to a decrease in the resistance between the workpieces 14 and electrodes 2 and 3, a decrease in the degree of heating of the metal and, as a result, a decrease in the size of the core of the weld spot and a decrease in the strength of the weld spot. Further, when the metal is melted in the area of formation of the weld spot core, the rigidity of the metal of the workpieces decreases, which leads to a decrease in the clamping force between the workpieces 14 and the electrodes 2 and 3, which leads to an increase in resistance, an increase in heating, the appearance of a gap between the workpieces 14 and splashing, due to which the strength of the weld spot will reduce. To prevent a decrease of the welding quality, the clamping force is maintained at a constant level due to the movement of the electrodes 2 and 3 in one direction or another, depending on whether it is necessary to increase or decrease the clamping force of the workpieces 14. The welding current is regulated depending on the calculated resistance between workpieces 14 and electrodes 2 and 3 and workpieces 14. Therefore, the degree of heating of the weld spot core is adjusted.

Data transmission parameters at step S5 of welding:
- Data of the position of the electrodes 2 and 3, force on electrodes 2 and 3, welding current and voltage values are transmitted to the DTC 131 with maximum data transmission parameters to provide low delay between receiving data of the DTC 131 and outputting a control action thereto. These data critically affect the result of the step.
- The position data of the welding gun in relation to the robot position and from the work angle sensor are not transmitted to the DTC 131. Position adjustment of the welding gun 1 is not performed, therefore, these data do not affect the result.

It is to note that in addition to processing the welding parameter data received from the data compressor 121 or from ADC 123 and forming control actions using technology implementation means, the DTC 131 evaluates tends of changing of the welding core parameters-the resistance and the clamping force depending on the control actions, for example, changes in welding current, and predicts the replacement or recovering of the cap shape, taking into account the actual length of these caps.. Prioritization and adjustment of data transmission parameters significantly reduces the load on the computing power of the DTC 131 and reduces the delay in receiving, processing and issuing control actions, therefore, reducing the duration of the welding cycle.

At step S6 forging is performed by holding the clamping force of the electrodes 2 and 3 after the welding current is turned off, wherein this clamping force can be the same as the clamping force during the welding current supply, or differ from it, for example, to the higher side. If necessary, depending on the material and other parameters of the workpieces 14, a welding current pulse can be applied thereto to relieve residual stresses in the welding zone.

Data transmission parameters at step S6 of forging:
- Data of the clamping force on electrodes 2 and 3 and position thereof are transmitted to the DTC 131 with maximum data transmission parameters. A timely change in force to the required level in the process of cooling of the weld spot core affects the welding quality, so this data critically affect the result.
- The position data of the welding gun in relation to the robot position and from the work angle sensor are not transmitted to the DTC 131. Position adjustment of the welding gun 1 is not performed, therefore, these data do not affect the result.
- Data of the welding current and voltage between electrodes 2 and 3 are not transmitted, since the welding current is no longer supplied to the electrodes 2 and 3. These data do not affect the result.

At step S7 of moving apart of the electrodes and the movement thereof to the next spot the electrodes 2 and 3 are retracted from the workpieces 14, and the robot 11 moves the welding gun to the next weld spot within the weld spot group or to the next weld spot group on the work pieces 14 or to the waiting area for the next work pieces 14. It should be noted that the robot 11 cannot develop high accelerations and speeds with small displacements, as it has a large inertia, which leads to a positioning error of the welding gun 1 and a delay before the start of closing of the electrodes 2 and 3 in the next welding zone. Due to the presence of two movable electrodes 2 and 3 the robot 11 does not perform the movement of the welding gun along the axis of the electrode 2 or 3, but moves the gun in a trajectory along the surface envelope of the workpieces 14 with a constant offset from this surface within the group of weld spots on the workpieces 14. This significantly reduces duration of the welding cycle, since it is not necessary to wait until the robot 11 performs the complex movement of the welding gun 1 in space with several decelerations and accelerations. If the surface envelope of the workpiece 14 is a straight line, the robot 11 moves the welding gun 1 in a plane-parallel manner.

Data transmission parameters at step S7 of moving apart of the electrodes and of moving thereof to the next spot:
- The position data of the electrodes 2 and 3 and force data on electrodes are transmitted to the DTC 131 with medium amounts of data transmission parameters. At this step, the position data and clamping force data are required for verification that the electrodes do not stick to the metal of the workpieces 14. These data affect the result of the welding cycle.
- The position data of the welding gun 1 in relation to the robot position are rarely transmitted to the DTC 131.
- The position data of the welding gun 1 from the work angle sensor are not transmitted since the position of the welding gun 1 is not important at this step.

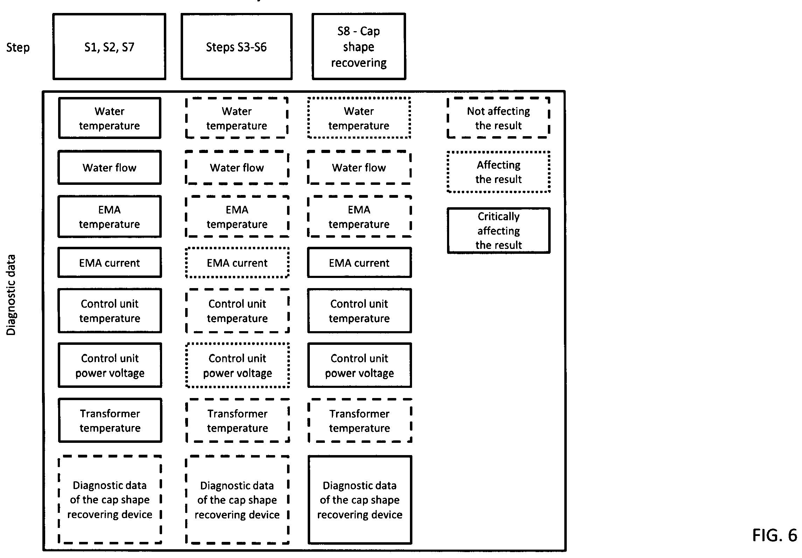

Fig. 6 also shows the transmitted diagnostic data. Diagnostic data are received in DTC 131 in modes depending on steps of the technological process. During steps of the welding cycle S1, S2, S7, the following diagnostic data are received in the DTC 131:
- Cooling water temperature data are transmitted with average parameters to avoid welding if the water temperature exceeds the allowable one
- Water consumption data in order to ensure that welding is carried out with proper cooling of the heating components of the welding gun and to avoid overheating, as well as to monitor the change in water consumption over time, to monitor possible clogging of channels and pipes for water supply.
- Temperature data of the EMA, the control unit 9, the robot controller 10 of the robot 11, the weld timer 13 and the transformer 4 in order to monitor that their temperature is within acceptable limits for subsequent welding. This data are transmitted with medium data transmission parameters to ensure the required processing speed of the welding gun 1 during these steps.
- EMA current data in order to evaluate the condition of the EMA mechanisms before welding.
- Data on the voltage in the power supply of the control units 9, the robot controller 10 of the robot 11, the weld timer 13 in order to avoid failure due to an unacceptable supply voltage during welding.
- Diagnostic data of the cap shape recovering device are not transmitted at this step, because this device does not function during the execution of the welding cycle.

All specified data are processed in order to assess the condition of the mechanisms and devices of the welding cell and predict their repair and maintenance, for example, adding lubricant to a roller-screw gear of the EMA 5 or the EMA 6. Processed data, for example, the average current consumed by the EMA 5 motor is stored by the processor of the monitoring and control device 16 in the storage device 133 for later comparison with the average current consumed by this motor in the next welding cycle. The result of the comparison in the form of a dependence of the average current consumption on time is stored in the storage device 133.

At steps S3-S6 of the welding cycle the following diagnostic data are transmitted:
- Cooling water temperature data are transmitted with average parameters to avoid welding if the water temperature exceeds the allowable one.
- Water consumption data are transmitted with average data transmission parameters, since the cap may fly off the electrode 2 or 3, which leads to a sharp change in water flow. Meanwhile, the DTC 131 gives a command to stop the execution of the welding cycle, which avoids hitting the uncapped electrode on the workpieces 14 and damaging the workpieces 14 or the welding gun 1.
- Temperature data of the EMA 5 and the EMA 6 are transmitted with medium frequency to monitor the increase in temperature compared to previous welding cycles and predict a time limit for maintenance of the EMA 5 and the EMA 6.
- Diagnostic data of the cap shape recovering device are not transmitted at this step, since this device does not operate at the time of performing the welding cycle.

As welding progresses, the welding caps on electrodes 2 and 3 wear out. Their wear is estimated by the digital twin controller 131 by the difference in position of the electrodes 2 and 3 in the current and previous welding cycle. When wear reaches a pre-set value or when welding resistance parameters change beyond the preset range, the DTC 131 transmits a command to perform the procedure for restoring the shape of the electrode caps - while waiting for the next workpieces 14 to be supplied for welding, the DTC 131 gives a command to the robot 11 to move the welding gun to the cap shape recovering equipment, which can be represented, for example, by a cap sharpening machine. When the gun is delivered to the cap sharpening machine, welding gun 1 clamps the electrodes 2 and 3 so that the cutting tool of this machine is between them. At the same time, the predetermined force of clamping of the electrodes is maintained. The DTC 131 receives force and position data of the electrodes 2 and 3 in order to maintain the clamping force and ensure the correct surface quality of the caps. The DTC 131 also receives data on the motor current of the cap sharpening machine also receives data on the motor current. Therefore, the DTC 131 allows predicting the replacement of the cutting tool and the maintenance of the mechanisms of the cap sharpening machine. It becomes possible to schedule the appropriate work at the time of the planned shutdown of the production line and avoid unplanned downtime.

At the same time, the diagnostic data are transmitted in the DTC 131 during operation S8 in the following modes:
- Water temperature data are rarely transmitted, since the welding current is not supplied to the electrodes 2 and 3. Accordingly, said electrodes and transformer 4 do not heat up, the EMA 5 and the EMA 6 operate in light mode and are unlikely to overheat.
- Water consumption data are transmitted with medium frequency in order to detect the absence of a cap on electrode 2 or 3 and stop the execution of operation S8 of recovering the shape of the caps. In some cases, the water supply may be completely shutted down due to the absence of the need for cooling. In this case, water temperature data and water consumption data are not transmitted to the DTC 131.
- Temperature data of the EMA 5 and the EMA 6 are transmitted at medium frequency.
- The current consumption data of the EMA 5 and the EMA 6 are rarely transmitted or not transmitted.
- Diagnostic data of the cap shape recovering device, for example, the current consumed by the motor of the device, are transmitted to the DTC 131 to predict the cutting tool replacement.

As noted above, several robots 11 with welding guns 1 can be provided in the welding cell. In this case, several embodiments of the invention are possible. According to one of the embodiments, several monitoring and control devices 16 can be provided in the welding cell, wherein programs of the DTC 131 are executed, performing data processing received from one set of equipment for the main and auxiliary technological operations, and generating control signals for one set of equipment for the main and auxiliary technological operations. The priority manager 126 is executed in each monitoring and control device 16. In another embodiment, one monitoring and control device 16 is arranged in the welding cell, wherein a program of the DTC 131 is executed, performing data processing received from the whole set of equipment for the main and auxiliary technological operations. The priority manager 126 is executed by the processor of this monitoring and control device 16. In the last case, the priority manager 126 becomes even more important, since the amount of data transmitted to the DTC 131 at one time increases significantly, and it is important to ensure that exactly the data is transmitted which are required at each step of the welding cycle carried out by each welding gun 1 in the welding cell.

The DTC 131 predicts the results of welding operations and corrects the welding parameters to achieve the reference value of the welding parameters.

For example, the storage device 133 stores the reference welding parameters represented by at least a reference resistance-time relationship between the electrodes 2 and 3 the workpieces 14 and between the workpieces 14. During welding, resistance data at each moment of time are sent to the DTC 131, which are compared with the reference values. If the received resistance data differ from the reference data within the tolerance range, the DTC 131 changes the welding parameters, for example, the clamping force on the electrodes 2 and 3.

The mathematical model, which is calculated by the DTC 131, contains a set of algorithms, formulas, coefficients that describe the key features of the welding operations. A set of mathematical models of the equipment that is part of the welding cell and operations performed by the welding cell, including auxiliary ones, for example, the procedure for recovering the shape of caps on electrodes 2 and 3, forms a digital twin of the equipment of the welding cell and operations performed by welding cell. For example, a mathematical model of welding operations based on oscillograms (dependences of parameters over time) of welding operation variables, including measured welding current, resistance between the electrodes 2 and 3 and workpieces 14 and between workpieces 14, compression force on electrodes 2 and 3, highlights three main steps of creating a weld spot: melting, forming the core of the weld spot and forging. Based on the data from these oscillograms, the mathematical model of the core of the weld spot generates data on the size of the core of the weld spot and the deformation of the metal surface (by the position of the rod). During the welding process an expansion occurs when the material is heated, and during the melting and crystallization of the material, clamping of the workpieces 14 to be welded occurs, which can be monitored by the indications of the EMA rotor position sensors of the EMA 5 and the EMA 6, reflecting the position of the electrodes 2 and 3, since the electrodes 2 and 3 move when the material expands and contracts. When the material clamped by the electrodes 2 and 3 expands, the thickness of the workpieces 14 increases, and the electrodes 2 and 3 move in the direction from the workpieces 14. Then, when the material enters the thermoplastic state during melting, the resistance of the material of the workpieces 14 to the external clamping force decreases and becomes less than the clamping force, and the electrodes 2 and 3 move in the direction towards the workpieces 14. The size of the core of the weld spot is determined by the time between the onset of thermoplastic deformation and the onset of crystallization. Material splashing from the core of the weld spot is determined by a sharp decrease in the resistance of the material to external force and the movement of the electrodes 2 and 3 towards the workpieces 14. Based on these data and according to the tables of standards, the DTC 131 determines a binary assessment of the welding quality. These include ISO 14373:2015 for low carbon steels and ISO 18595:2021 for aluminum alloys (current revisions of documents at the time of filing the present application for an invention).

In still another embodiment, the DTC 131 also obtains the physical parameters of the workpieces 14 to be welded before the first welding, for example, resistance, thickness, and, based on a mathematical model of the welding process, determines the target welding parameters, such as clamping force, welding current, duration of the main steps of creating weld spots.

In still another embodiment, the DTC 131 also executes a neural network to predict welding quality. To train the neural network by means external to the welding cell, for example, by using destructive or non-destructive control of the competed weld spots, the quality of the weld spots is classified as sufficient or inappropriate. These classes are associated with the oscillograms described above. The indicated classes and oscillograms are transmitted to the neural network. As a result of training, the neutral network classifies the weld spots according to the parameters that are transmitted to the DTC 131 during welding. When welding during operation of the welding cell the results of the performed control are transmitted to the DTC 131, where they are compared with the classification results of the welding quality by the neural network. If the result does not match, the coefficients of the neural network neurons are corrected. Therefore, the neural network is trained on the dynamics of parameters in oscillograms to evaluate and predict the welding quality, increasing the reliability of the result. It is to note that neural network training is possible throughout the entire period of use of the welding cell. At the same time, data on welding results can either be entered into the DTC from its human-machine interface (hereinafter referred to as HMI) (not shown), or come from a top-level control system, including from other DTC 131 of one or more plants. Therefore, the degree of accuracy in assessing and predicting the welding quality is increased. Based on the result of welding quality prediction during welding operations, the DTC 131 issues a corrective command to change the welding current, of the clamping force on the electrodes 2 and/or 3, and the position of the electrodes 2 and 3. The DTC 131 also performs trend and correlation analysis between the measured parameters in time between different weld spots throughout the entire period of operation of the welding cell, and based on this analysis, predicts the required maintenance of the equipment of the welding cell, providing information on its HMI, or in a higher-level control system. In order to be able to quickly execute the neural network, the high performance of the DTC 131 is required, since need to process a large amount of data. The priority manager 126 allows to reduce the load on the processor and, therefore, reduce the performance requirements of the processor of the monitoring and control device 16. The performance of the welding cell is improved by reducing the total time of the welding cycle while maintaining the required level of welding quality.

In another embodiment, the DTC program of the DTC 131 also contains a set of mathematical models of the welding cell equipment and the welding process, which form a digital twin of the welding cell. The DTC 131 compares the behavior of the digital twin, i.e. the results of mathematical model calculations, with the actual behavior of the equipment, such as the actual clamping force on the electrodes 2 and 3, the welding current, the temperature, and corrects the control signal so that the actual welding operation matches the digital twin of the welding operation. Meanwhile, the DTC 131, in the presence of systematic deviations in behavior, can give a signal about the need for premature or scheduled maintenance of the welding cell equipment in advance. Taking into account the behavior of the digital twin and correcting the parameters of the actual welding operation allows for predictable and stable quality of the weld spot, thereby increasing the yield of good weld spots and increasing the welding cell performance.

Note that it is possible, in one embodiment, to combine methods for evaluating a state of welding cell equipment and a state of welding operations.

## Claims

1. A welding cell for a resistance spot welding, the welding cell comprising:
- at least one welding gun (1) for a resistance spot welding, each welding gun comprising two movable electrodes (2, 3) and electromechanical actuators (5, 6) to move said two movable electrodes (2, 3);
- a control unit (9) to control said electromechanical actuators (5, 6);
- at least one robot (11) for mutual positioning of the welding gun (1) and workpieces (14) to be welded;
- data collecting means (101) comprising clamping force sensors (8, 12) for measuring the clamping force on the electrodes (2, 3), and;
- means (102) for improving efficiency of data collecting and processing, the means comprising an amplifier (122) to amplify a signal of the clamping force sensors (8, 12), an analog-to-digital converter (123) to convert the amplified signal of the clamping force sensors (8, 12) into a digitized signal;
- the welding cell being **characterized in that:**
- the welding cell comprises monitoring and control means (103) comprising a digital twin controller (131) configured to provide, based on said digitized signal, a control signal to the control unit (9) to control the electromechanical actuators (5, 6) for moving the electrodes (2, 3);
- the means (102) for improving efficiency of data collecting and processing further comprising a data transmission priority manager (126) configured to adjust a digit capacity, a transmission rate and a transmission frequency of the digitized signal transmitted to said digital twin controller (131), separately, for signals of each sensor.

2. The welding cell according to claim 1, wherein the monitoring and control means (103) further comprise a monitoring and control device (16) comprising a transceiver (124) to receive said digitized signal, and a processor, and wherein the data transmission priority manager (126) is a signal switcher configured as a software module executable by the processor of the monitoring and control device (16).

3. The welding cell according to any of the preceding claims, wherein the data collecting means (101) further include a work angle sensor for determining a work angle of the welding gun relative to a surface of the workpieces (14), and wherein the digital twin controller (131) is configured to provide an adjustment of the work angle of the welding gun (1) relative to the workpieces (14) by means of said at least one robot (11).

4. The welding cell according to any of the preceding claims, wherein caps are provided on the ends of the electrodes (2, 3), and wherein the welding cell further comprises a cap recovering or replacing device.

5. The welding cell according to any of the preceding claims, further comprising a cooling circuit for the electrodes (2, 3) and a water supply device to supply water into said cooling circuit.

6. The welding cell according to any of the preceding claims, wherein the digital twin controller (131) is configured to evaluate a state of welding cell equipment and a state of welding operations using at least one of the methods:
- comparison with reference values,
- comparison with calculation results using a mathematical model,
- comparison with a digital twin of the welding cell equipment and the welding operations,
- evaluation and classification using a neural network.

7. The welding cell, accordingly to claim 6, wherein said digital twin controller (131) is further configured to predict the state of the welding cell equipment and the parameters of welding operations based on the behavior of the digital twin, and
to provide a control signal to the control unit (9) to control the electromechanical actuators (5, 6) for moving the electrodes (2, 3) based on said evaluation and said prediction of the state of the welding cell equipment and the welding operation parameters.

8. The welding cell according to any of the preceding claims, wherein the means (102) for improving efficiency of data collecting and processing further comprise a data compressor (121) configured to combine digitized signals from several sensors.

9. The use of a welding cell, accordingly to one or more of the previous claims from 1 to 8, for performing a resistance spot welding.

10. A welding method performed by the welding cell in accordance with one or more of the previous claims from 1 to 8, the method comprising the following steps:
- providing a welding cell accordingly to one or more of the previous claims from 1 to 8 and advancing the welding gun (1) so that to move the electrodes (2, 3) for touching workpieces (14) to be welded;
- performing clamping force accumulation and stabilization;
- performing determination of welding parameters;
- welding with simultaneous evaluation of welding parameters and predicting further welding spot quality, and then changing of welding parameters based on the prediction and;
- moving apart of the electrodes and moving to the next spot.
